# EUROPÄISCHE PATENTANMELDUNG

(11) **EP 0 848 196 A2**
(43) Veröffentlichungstag der Anmeldung: **17.06.1998**
(21) Anmeldenummer: 97121632.0
(22) Anmeldetag: 09.12.1997
(51) Int. Cl.: F16K 15/06, F16K 15/18

(54) **Anschlusskupplung für eine Leitung**

(30) Priorität: 13.12.1996 DE 29621654 U
(71) Anmelder: Gossler Fluidtec GmbH, 21465 Reinbek (DE)
(72) Erfinder: Heidelberg, Sven, 21272 Egestorf (DE)
(74) Vertreter: Liebelt, Rolf, Dipl.-Ing.

(57) **Zusammenfassung**

Bei einer Anschlußkupplung für eine Leitung am Befüllstutzen eines Tankes, vorzugsweise eines im Erdreich angeordneten Kraftstofflagertankes einer Tankstelle ist im Kupplungsgehäuse 2, 4 durch ein Absperrelement 5 vorgesehen, das unter Vorspannung stehend in der Schließstellung gehalten und beim Anschluß einer Leitung an den Befüllstutzen mittels eines Stellelementes 1 automatisch gegen die Kraft der Vorspannung geöffnet wird. Das Absperrelement umfaßt einen Ventilteller 5, der an einem Ventilsitz 51 am Kupplungsgehäuse 2, 4 unter Vorspannung stehend dichtend anliegt. Am Ventilteller 5 greift ein Stellelement 1 an, das bei geschlossenem Absperrelement über den freien Rand des Kupplungsgehäuses 2, 4 hinausragt.

## Beschreibung

Die Erfindung betrifft eine Anschlußkupplung für eine Leitung am Befüllstutzen eines Tankes, vorzugsweise eines im Erdreich angeordneten Kraftstofflagertankes einer Tankstelle.

Beim Umladen flüssiger Medien mit hohem Dampfdruck, wie Vergaserkraftstoffen, vom Tankwagen in den Erdtank einer Tankstelle entweichen Kohlenwasserstoffgase bzw. -dämpfe in die Umwelt, da die Verschlußkappe des Befüllstutzens des Tanks geöffnet werden muß, wodurch eine unmittelbare Verbindung zwischen dem Innenraum des Tankes und der Atmosphäre geschaffen wird, bevor die Schlauchverbindung mit dem Befüllstutzen hergestellt werden kann. Die gleiche Situation ist beim Lösen der Schlauchverbindung bis zum Verschließen des Befüllstutzens mit der Verschlußkappe gegeben. Des weiteren können bei einer nicht ordnungsgemäßen Anordnung der Verschlußkappe auf dem Befüllstutzen Dämpfe aus dem Erdtank unkontrolliert entweichen.

Aufgabe der Erfindung ist es, eine Anschlußkupplung für eine Leitung am Befüllstutzen eines Tankes so auszubilden, daß diese Unzulänglichkeiten behoben werden.

Diese Aufgabe wird erfindungsgemäß bei einer Anschlußkupplung der eingangs beschriebenen Gattung dadurch gelöst, daß im Kupplungsgehäuse ein Absperrelement vorgesehen ist, das unter Vorspannung stehend in der Schließstellung gehalten und beim Anschluß einer Leitung an den Befüllstutzen automatisch gegen die Kraft der Vorspannung geöffnet wird.

Mit dem Absperrelement nach der Erfindung wird für den Befüllstutzen eines Tankes eine Anschlußkupplung erhalten, deren Durchlaß nur während des Anschlusses eines Füllschlauches an den Stutzen freigegeben wird. Auf diese Weise wird mit einfachen Mitteln eine Anschlußkupplung mit einem Absperrelement geschaffen, das automatisch beim Anschluß einer Leitung an den Befüllstutzen geöffnet wird, so daß Flüssigkeit in den Tank eingebracht werden kann, und das beim Trennen der Leitung vom Befüllstutzen automatisch schließt, wodurch das unkontrollierte Entweichen von Gasen oder Dämpfen über den Befüllstutzen aus dem Tank sicher unterbunden wird.

Bei einer bevorzugten Ausgestaltung der Erfindung umfaßt das Absperrelement einen Ventilteller, der an einem Ventilsitz am Kupplungsgehäuse unter Vorspannung stehend dichtend anliegt, und greift am Ventilteller ein Stellelement an, das bei geschlossenem Absperrelement über den freien Rand des Kupplungsgehäuses hinausragt. Beim Anschluß einer Leitung an den Befüllstutzen kommt deren Kupplungsteil mit dem Stellelement in Eingriff, wodurch das Absperrelement gegen die Kraft der Vorspannung aus der Schließstellung gelöst wird, so daß über den Befüllstutzen Flüssigkeit in den Lagertank eingefüllt werden kann. Beim Lösen der Leitung vom Befüllstutzen kehren aufgrund der auf das Absperrelement einwirkenden Kräfte sowohl das Stellelement in die Ausgangslage und zugleich auch das Absperrelement in die Schließstellung zurück, wodurch ein unkontrolliertes Ausströmen von Dämpfen und Gasen über den Befüllstutzen aus dem Tank unterbunden ist.

Vorteilhafte Weiterbildungen der Erfindung sind in den Unteransprüchen angegeben.

Ein Ausführungsbeispiel der Erfindung wird noch an Hand der Zeichnungen beschrieben. Es stellen dar:
- Fig. 1:: eine schematische Schnittansicht durch eine an einem Befüllstutzen befestigbare Anschlußkupplung für eine Leitung mit geschlossenem Absperrelement,
- Fig. 2:: eine Schnittansicht gemäß Fig. 1, jedoch mit geöffnetem Absperrelement.

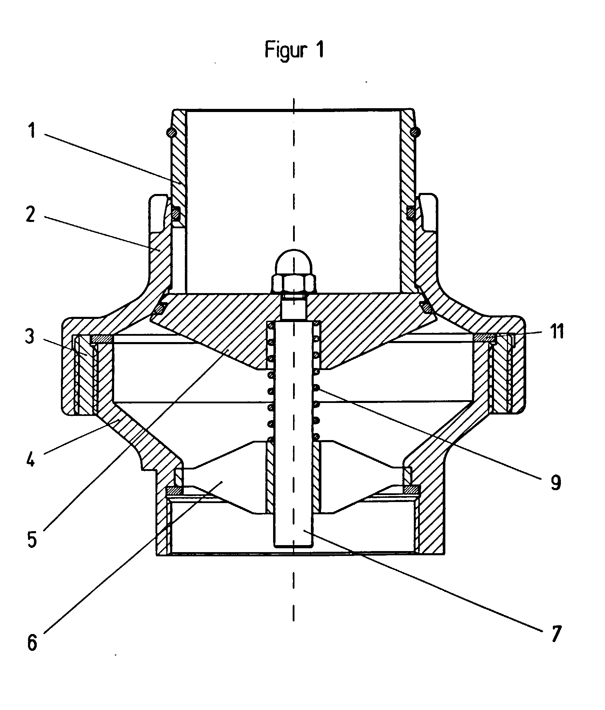

Die dargestellte Anschlußkupplung weist ein aus einem Gehäuseunterteil 4 und einem Gehäuseoberteil 2 bestehendes Kupplungsgehäuse auf. Das Gehäuseunterteil 4 ist mit einem Gewinde 55 an einem nicht gezeigten Befüllstutzen eines Lagertankes befestigbar. An das dem Gewinde 55 gegenüberliegende freie Ende des Gehäuseoberteiles 2 wird mit einem üblichen Kupplungselement eine Leitung (nicht dargestellt) angeschlossen. Im Inneren des Kupplungsgehäuses ist ein als Ventilteller 5 ausgebildetes Absperrelement vorgesehen, das in der Schließstellung (Fig. 1) an einem am Gehäuseoberteil 2 ausgebildeten Ventilsitz 51 gasdicht anliegt. Die erforderliche Anpreßkraft zum Erzeugen einer ausreichenden Dichtung zwischen Ventilteller 5 und Ventilsitz 51 wird von einer als Schraubenfeder ausgeführten Druckfeder 9 aufgebracht. Diese Druckfeder 9 stützt sich einerseits am Ventilteller 5 und andererseits an einer Ventilführung 6 im Gehäuseunterteil 4 ab.

Der Ventilteller 5 ist in Axialrichtung beweglich und wird über eine Ventilstange 7, die in der Ventilführung 6 verschiebbar gelagert ist, geführt.

Im Gehäuseoberteil 2 ist eine Hülse 1 oder Buchse geführt, die sich auf den Ventilteller 5 abstützt, angrenzend an den Ventilteller 5 Durchbrechungen 52 aufweist und in der Schließstellung (Fig. 1) der Anschlußkupplung über den oberen Rand des Gehäuseoberteiles 2 hinausragt.

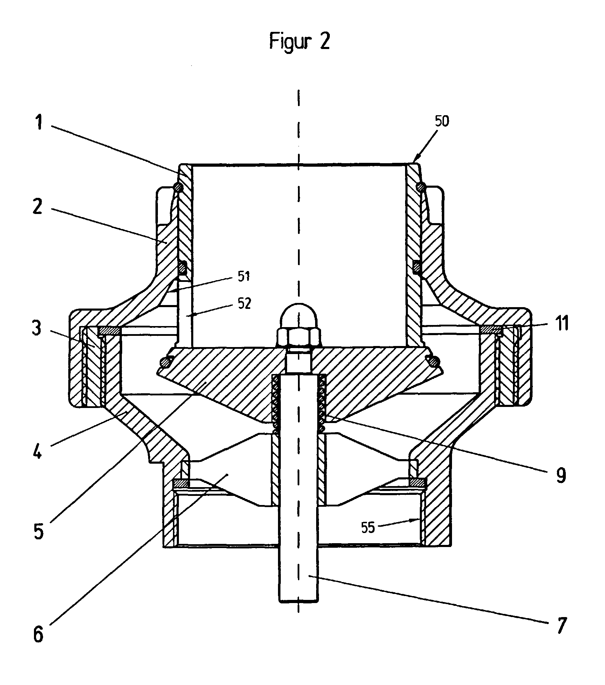

Beim Anschließen eines Befüllschlauches an die dargestellte Anschlußkupplung wird das übliche Dichtringstück des am Befüllschlauch gehaltenen Kupplungsteiles (nicht dargestellt) auf den als Dichtkante 50 ausgebildeten oberen Rand der Hülse 1 aufgesetzt. Durch das Aufbringen einer axialen Kraftkomponente an diesem Kupplungsteil werden die Hülse 1 und von dieser der Ventilteller 5 in die in Fig. 2 gezeigte Offenstellung verschoben und nach dem Verbinden des Kupplungsteiles mit der Anschlußkupplung in dieser Stellung gehalten, so daß Flüssigkeit aus dem Befüllschlauch über die Durchbrechungen 52 am Ventilteller 5 vorbeiströmen kann.

Beim Lösen des Befüllschlauches von der Anschlußkupplung kehren die Hülse 1 und der Ventilteller 5 unter Wirkung der Druckfeder 9 in die in Fig. 1 gezeigte Lage zurück.

Das Gehäuseoberteil 2 und das Gehäuseunterteil 4 sind durch einen aus Kunststoff gefertigten Gewindering 3 und eine Kunststoff-Flachdichtung 11 elektrisch voneinander isoliert.

## Patentansprüche

1. Anschlußkupplung für eine Leitung am Befüllstutzen eines Tankes, vorzugsweise eines im Erdreich angeordneten Kraftstofflagertankes einer Tankstelle, gekennzeichnet durch ein im Kupplungsgehäuse (2, 4) vorgesehenes Absperrelement (5), das unter Vorspannung stehend in der Schließstellung (Fig. 1) gehalten und beim Anschluß einer Leitung an den Befüllstutzen mittels eines Stellelementes (1) automatisch gegen die Kraft der Vorspannung geöffnet (Fig. 2) wird.

2. Anschlußkupplung nach Anspruch 1, dadurch gekennzeichnet, daß das Absperrelement einen Ventilteller (5) umfaßt, der an einem Ventilsitz (51) am Kupplungsgehäuse (2, 4) unter Vorspannung stehend dichtend anliegt, und am Ventilteller (5) ein Stellelement (1) angreift, das bei geschlossenem Absperrelement über den freien Rand des Kupplungsgehäuses (2, 4) hinausragt.

3. Anschlußkupplung nach Anspruch 1 oder 2, dadurch gekennzeichnet, daß das Stellelement als im Kupplungsgehäuse (2, 4) geführte Hülse (1) ausgebildet ist, die angrenzend an den Ventilteller (5) Durchbrechungen (52) aufweist.

4. Anschlußkupplung nach einem der vorhergehenden Ansprüche, dadurch gekennzeichnet, daß das Absperrelement (5) von einer Schraubenfeder (9) in die Schließstellung vorgespannt wird.

5. Anschlußkupplung nach einem der Ansprüche 2 bis 4, dadurch gekennzeichnet, daß das Absperrelement (5) und das Stellelement (1) einstückig ausgebildet sind.
